# FASCICULE DE BREVET EUROPEEN

(11) **EP 2 655 099 B1**
(45) Date de publication et mention de la délivrance du brevet: **25.02.2015**
(21) Numéro de dépôt: 11802718.4
(22) Date de dépôt: 20.12.2011
(51) Int. Cl.: B60C 15/06, D07B 1/16, D07B 1/06

(54) **PNEUMATIQUE DONT L'ARMATURE DE CARCASSE EST RENFORCEE PAR UNE COUCHE D'ELEMENTS DE RENFORCEMENT DANS LA ZONE DU BOURRELET**
REIFEN MIT KARKASSENVERSTÄRKUNG MIT EINER VERSTÄRKUNGSELEMENTSCHICHT IM WULSTBEREICH
TYRE, THE CARCASS REINFORCEMENT OF WHICH IS REINFORCED WITH A LAYER OF REINFORCING ELEMENTS IN THE BEAD REGION

(30) Priorité: 21.12.2010 FR 1060884
(43) Date de publication de la demande: 30.10.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: SALLAZ, Gilles, F-63040 Clermont-Ferrand Cedex 9 (FR); DEGEORGES, Agnès, F-63040 Clermont-Ferrand Cedex 9 (FR); DOMINGO, Alain, F-63040 Clermont-Ferrand Cedex 9 (FR); GRISIN, Bopha, F-63040 Clermont-Ferrand Cedex 9 (FR)
(74) Mandataire: Le Cam, Stéphane Georges Elie
(86) Numéro de dépôt international: PCT/EP2011/073416
(87) Numéro de publication internationale: WO 2012/084952

(56) Documents cités:
- EP-A1- 2 213 484
- FR-A1- 2 940 184

## Description

La présente invention concerne un pneumatique, à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

De tels pneumatiques peuvent encore comporter au niveau des bourrelets une ou plusieurs couches d'éléments de renforcement retournées autour de la tringle. Ces couches sont le plus souvent constituées d'éléments de renforcement orientés par rapport à la direction circonférentielle d'un angle inférieur à 45°, et le plus souvent inférieur à 25°. Ces couches d'éléments de renforcements ont notamment pour fonction de limiter les déplacements longitudinaux des matériaux constitutifs du bourrelet par rapport à la jante de la roue pour limiter une usure prématurée dudit bourrelet que l'on qualifie d'usure au portage. Elles permettent également de limiter la déformation permanente du bourrelet sur le crochet de jante, due au phénomène de fluage dynamique des matériaux élastomériques ; Cette déformation du bourrelet peut empêcher le rechapage des pneumatiques lorsqu'elle est excessive. Elles contribuent encore à la protection des zones basses du pneumatique contre les agressions subies lors du montage et du démontage des pneumatiques sur les jantes. Un tel pneumatique est par exemple décrit dans la demande de brevet EP-A-2 213 484.

Bien que les pneumatiques ne soient pas prévus pour ces cas, il est connu que dans certains pays les pneumatiques sont utilisés en dehors des conditions normales notamment en termes de charges portées et de pression de gonflage. La présence de couches d'éléments de renforcement retournées autour de la tringle permet encore d'améliorer la résistance des pneumatiques à de telles sollicitations. En effet, il semble que les couches d'éléments de renforcement retournées autour de la tringle vont protéger l'armature de carcasse dans la zone du bourrelet du pneumatique contre ces sollicitations correspondant à des usages excessifs, dès lors que l'extrémité de la couche d'éléments de renforcement retournée autour de la tringle protège la zone basse du pneumatique contre les appuis sur le crochet de jante. Cette protection ne se fait toutefois pas sans risque d'endommagement des couches d'éléments de renforcement retournées autour de la tringle ; on observe notamment lors de tels usages des cassures des éléments de renforcement de la couches d'éléments de renforcement retournées autour de la tringle dans les zones de mise en compression et/ou des endommagements par fissuration des mélanges polymériques environnant l'extrémité radialement extérieure de la couches d'éléments de renforcement retournées autour de la tringle.

Notamment lorsque l'extrémité de la couche d'éléments de renforcement retournée autour de la tringle axialement extérieure au retournement d'armature de carcasse est radialement intérieure à l'extrémité dudit retournement et lorsque le pneumatique est soumis à de telles sollicitations en termes de charges portées et de pression de gonflage, il peut apparaître des cassures des éléments de renforcement à l'extrémité du retournement de l'armature de carcasse dans les zones de mise en compression et/ou des endommagements par fissuration des mélanges polymériques environnant l'extrémité du retournement.

Afin d'éviter des dégradations plus importantes de la zone du bourrelet et notamment une propagation des fissures entre les extrémités du retournement de l'armature de carcasse de la couche d'éléments de renforcement retournée autour de la tringle, il est usuel de décaler l'extrémité du retournement de l'armature de carcasse et l'extrémité de la couche d'éléments de renforcement retournée autour de la tringle selon la direction radiale, le décalage étant suffisamment important pour éviter ces propagations.

Il est alors nécessaire de trouver un compromis entre la position de l'extrémité de la couche d'éléments de renforcement retournée autour de la tringle qui assure une protection contre l'usure au portage et la positon de l'extrémité du retournement d'armature de carcasse qui ne doit pas être dans une zone pénalisante en termes de contraintes pouvant conduire aux phénomènes de fissuration des mélanges polymériques environnants.

Ce compris est d'autant plus délicat à trouver lorsque les pneumatiques concernés sont des pneumatiques à faible hauteur de flanc, c'est-à-dire présentant des hauteurs de flanc inférieures à 200 mm.

Les inventeurs se sont ainsi donnés pour mission de fournir des pneumatiques pour véhicules lourds de type "Poids Lourds", plus particulièrement des pneumatiques avec une hauteur de flanc est inférieure à 200 mm, dont les performances d'endurance peuvent être améliorées lors, notamment, d'un usage excessif en termes de charges portées et de pression de gonflage pouvant conduire soit à des phénomènes de fissuration soit à une usure au portage.

Ce but a été atteint selon l'invention par un pneumatique à armature de carcasse radiale, constituée d'au moins une couche d'éléments de renforcement, ledit pneumatique comprenant une armature de sommet, elle-même coiffée radialement d'une bande de roulement, ladite bande de roulement étant réunie à deux bourrelets par l'intermédiaire de deux flancs, au moins une couche d'éléments de renforcement de l'armature de carcasse étant ancrée dans chacun des bourrelets par retournement autour d'une tringle, l'armature de carcasse étant renforcé par au moins une couche d'éléments de renforcement retournée autour de la tringle, une extrémité de ladite au moins une couche d'éléments de renforcement retournée autour de la tringle étant axialement extérieure au retournement d'armature de carcasse et radialement intérieure à l'extrémité dudit retournement, l'autre extrémité de ladite au moins une couche d'éléments de renforcement retournée autour de la tringle étant axialement intérieure à l'armature de carcasse, les éléments de renforcement de ladite au moins une couche d'éléments de renforcement retournée autour de la tringle étant des câbles métalliques non frettés à couches saturées présentant au test dit de perméabilité un débit inférieur 5 cm³/mn et la distance entre l'extrémité, axialement extérieure au retournement d'armature de carcasse, de ladite au moins une couche d'éléments de renforcement retournée autour de la tringle et l'extrémité du retournement de l'armature de carcasse étant inférieure à 5 mm.

Au sens de l'invention, une couche saturée d'un câble à couches est une couche constituée de fils dans laquelle il n'existe pas suffisamment de place pour y ajouter au moins un fil supplémentaire.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

Au sens de l'invention, la notion de « axialement extérieure au retournement d'armature de carcasse » s'entend comme étant une position relative d'une extrémité de la couche d'éléments de renforcement retournée autour de la tringle par rapport à un point du retournement d'armature de carcasse correspondant à l'intersection entre la direction axiale passant par ladite extrémité et le retournement d'armature de carcasse.

Au sens de l'invention, la notion de « axialement intérieure à l'armature de carcasse » s'entend comme étant une position relative d'une extrémité de la couche d'éléments de renforcement retournée autour de la tringle par rapport à un point de l'armature de carcasse correspondant à l'intersection entre la direction axiale passant par ladite extrémité et l'armature de carcasse. Selon une autre formulation, l'extrémité concernée de la couche d'éléments de renforcement retournée autour de la tringle est alors radialement extérieure au point de la tringle radialement le plus proche de l'axe de rotation.

La distance entre l'extrémité, axialement extérieure au retournement d'armature de carcasse, de ladite au moins une couche d'éléments de renforcement retournée autour de la tringle et l'extrémité du retournement de l'armature de carcasse est mesurée sur une coupe transversale d'un pneumatique, le pneumatique étant donc dans un état non gonflé.

Le test dit de perméabilité permet de déterminer la perméabilité longitudinale à l'air des câbles testés, par mesure du volume d'air traversant une éprouvette sous pression constante pendant un temps donné. Le principe d'un tel test, bien connu de l'homme du métier, est de démontrer l'efficacité du traitement d'un câble pour le rendre imperméable à l'air ; il a été décrit par exemple dans la norme ASTM D2692-98.

Le test est réalisé sur des câbles extraits directement, par décorticage, des nappes de caoutchouc vulcanisées qu'ils renforcent, donc pénétrés par le caoutchouc cuit. Dans le cas de câbles frettés, on réalise le test après avoir enlevé le filé retordu ou non utilisé comme brin de frette.

Le test est réalisé sur 2 cm de longueur de câble, enrobé donc par sa composition de caoutchouc (ou gomme d'enrobage) environnante à l'état cuit, de la manière suivante : on envoie de l'air à l'entrée du câble, sous une pression de 1 bar, et on mesure le volume d'air à la sortie, à l'aide d'un débitmètre (calibré par exemple de 0 à 500 cm³/min). Pendant la mesure, l'échantillon de câble est bloqué dans un joint étanche comprimé (par exemple un joint en mousse dense ou en caoutchouc) de telle manière que seule la quantité d'air traversant le câble d'une extrémité à l'autre, selon son axe longitudinal, est prise en compte par la mesure ; l'étanchéité du joint étanche lui-même est contrôlée préalablement à l'aide d'une éprouvette de caoutchouc pleine, c'est-à-dire sans câble.

Le débit d'air moyen mesuré (moyenne sur 10 éprouvettes) est d'autant plus faible que l'imperméabilité longitudinale du câble est élevée. La mesure étant faite avec une précision de ± 0,2 cm³/min, les valeurs mesurées inférieures ou égales à 0,2 cm³/min sont considérées comme nulles ; elles correspondent à un câble qui peut être qualifié d'étanche (totalement étanche) à l'air selon son axe (i.e., dans sa direction longitudinale).

Ce test de perméabilité constitue en outre un moyen simple de mesure indirecte du taux de pénétration du câble par une composition de caoutchouc. Le débit mesuré est d'autant plus faible que le taux de pénétration du câble par le caoutchouc est élevé.

Des câbles présentant au test dit de perméabilité un débit inférieur à 20 cm3/mn présentent un taux de pénétration supérieure à 66%.

Des câbles présentant au test dit de perméabilité un débit inférieur à 2 cm3/mn présentent un taux de pénétration supérieure à 90%.

Le taux de pénétration d'un câble peut encore être estimé selon la méthode décrite ci-après. Dans le cas d'un câble à couches, la méthode consiste dans un premier temps à éliminer la couche extérieure sur un échantillon d'une longueur comprise entre 2 et 4 cm pour ensuite mesurer selon une direction longitudinale et selon un axe donné la somme des longueurs de mélange caoutchouteux rapporté sur la longueur de l'échantillon. Ces mesures de longueurs de mélange caoutchouteux excluent les espaces non pénétrés sur cet axe longitudinal. Ces mesures sont répétées sur trois axes longitudinaux répartis sur la périphérie de l'échantillon et répétées sur cinq échantillons de câbles.

Lorsque le câble comporte plusieurs couches, la première étape d'élimination est répétée avec la couche nouvellement extérieure et les mesures de longueurs de mélange caoutchouteux selon des axes longitudinaux.

Une moyenne de touts les rapports de longueurs de mélange caoutchouteux sur les longueurs des échantillons ainsi déterminés est ensuite effectuée pour définir le taux de pénétration du câble.

Les inventeurs ont su mettre en évidence qu'un pneumatique ainsi réalisé selon l'invention conduit à des améliorations en termes d'endurance notamment lorsque celui-ci est soumis à des contraintes excessives. En effet, les essais réalisés avec des charges portées excessives, le pneumatique étant gonflé à une pression supérieure à la pression recommandée, ont montré que celui-ci ne présentait pas d'endommagements trop prononcés au niveau de la zone des bourrelets. Un pneumatique de conception plus usuel avec une faible hauteur de flanc utilisé dans les mêmes conditions peut montrer soit un endommagement beaucoup plus prononcé, des fissurations se propageant entre l'extrémité du retournement d'armature de carcasse et l'extrémité de la couche d'éléments de renforcement retournée autour de la tringle soit une usure au portage prononcée.

Les inventeurs interprètent ces résultats par la présence de la couche retournée autour de la tringle constituée de câbles non frettés à couches saturées présentant au test dit de perméabilité un débit inférieur à 5 cm³/mn qui permet de limiter les risques d'apparition de fissure dans les mélanges polymériques aux extrémités de la couche retournée autour de la tringle. Une plus grande proximité entre l'extrémité radialement extérieure de la couche retournée autour de la tringle et l'extrémité du retournement de l'armature de carcasse n'est ainsi pas pénalisante ; cette plus grande proximité peut en outre autoriser un positionnement de l'extrémité du retournement dans une zone modérément pénalisante en termes de contraintes pouvant conduire aux phénomènes de fissuration des mélanges polymériques environnants. Comme expliqué précédemment, un tel positionnement n'est usuellement pas recherché pour conserver la fonction de la couche retournée autour de la tringle qui consiste à limiter l'usure au portage.

Les câbles de la couche retournée autour de la tringle selon l'invention conduisent encore à une amélioration de l'endurance de la couche retournée autour de la tringle. En effet, les éléments de renforcement de la couche retournée autour de la tringle sont notamment soumis à des contraintes de flexion et compression lors des roulages qui vont à l'encontre de leur endurance. Les câbles qui constituent les éléments de renforcement des couches retournées autour de la tringle sont en effet soumis à des contraintes importantes lors du roulage des pneumatiques, notamment à des flexions ou variations de courbure répétées induisant au niveau des fils des frottements, et donc de l'usure, ainsi que de la fatigue ; Ce phénomène est qualifié de "fretting-fatigue".

Pour remplir leur fonction de renforcement de la couche retournée autour de la tringle, lesdits câbles doivent tout d'abord présenter une bonne flexibilité et une endurance élevée en flexion, ce qui implique notamment que leurs fils présentent un diamètre relativement faible, de préférence inférieur à 0,28 mm, plus préférentiellement inférieur à 0,25 mm, plus petit généralement que celui des fils utilisés dans les câbles conventionnels par exemple pour les armatures de sommet des pneumatiques.

Les câbles de la couche retournée autour de la tringle sont également sujets à des phénomènes dits de "fatigue-corrosion" dus à la nature même des câbles qui favorisent le passage voire drainent des agents corrosifs tels que l'oxygène et l'humidité. En effet, l'air ou l'eau qui pénètrent dans le pneumatique par exemple lors d'une dégradation lors d'une coupure ou plus simplement du fait de la perméabilité, même faible de la surface intérieur du pneumatique, peuvent être conduits par les canaux formés au sein des câbles du fait même de leur structure.

Tous ces phénomènes de fatigue que l'on regroupe généralement sous le terme générique de "fretting-fatigue-corrosion" sont à l'origine d'une dégénérescence progressive des propriétés mécaniques des câbles et peuvent affecter, pour les conditions de roulage les plus sévères, la durée de vie de ces derniers.

Les câbles selon l'invention vont donc permettre aux couches retournées autour de la tringle de mieux résister à ces phénomènes de "fretting-fatigue-corrosion".

De préférence encore selon l'invention, les câbles d'au moins une couche retournée autour de la tringle présentent au test dit de perméabilité un débit inférieur à 2 cm³/mn.

Selon un mode de réalisation avantageux de l'invention, lesdits éléments de renforcement métalliques présentant au test dit de perméabilité un débit inférieur 5 cm³/mn d'au moins une couche retournée autour de la tringle sont des câbles à au moins deux couches, au moins une couche interne étant gainée d'une couche constituée d'une composition polymérique telle qu'une composition de caoutchouc réticulable ou réticulée, de préférence à base d'au moins un élastomère diénique.

Selon un mode de réalisation préférée de l'invention, les éléments de renforcement d'au moins une couche de l'armature de carcasse sont des câbles métalliques présentant au test dit de perméabilité un débit inférieur 20 cm³/mn.

Les câbles de l'armature de carcasse qui sont soumis de la même façon aux phénomènes de "fretting-fatigue-corrosion" peuvent ainsi présenter également une meilleure résistance à ces phénomène d'usure et de fatigue et donc contribuer à améliorer l'endurance du pneumatique notamment utilisée dans des conditions extrêmes.

Dans le cas d'une armature de carcasse comportant plusieurs couches d'éléments de renforcement, chacune desdites couches peut être conforme à l'invention. Avantageusement au moins la couche radialement extérieure comporte des câbles métalliques présentant au test dit de perméabilité un débit inférieur 20 cm³/mn.

De préférence encore selon l'invention, les câbles d'au moins une couche de l'armature de carcasse présentent au test dit de perméabilité un débit inférieur à 10 cm³/mn et de préférence encore inférieur à 2 cm³/mn.

Selon un mode de réalisation avantageux de l'invention, lesdits éléments de renforcement métalliques présentant au test dit de perméabilité un débit inférieur 20 cm³/mn d'au moins une couche de l'armature de carcasse sont des câbles à au moins deux couches, au moins une couche interne étant gainée d'une couche constituée d'une composition polymérique telle qu'une composition de caoutchouc réticulable ou réticulée, de préférence à base d'au moins un élastomère diénique.

L'invention propose encore un pneumatique à armature de carcasse radiale, constituée d'au moins une couche d'éléments de renforcement, ledit pneumatique comprenant une armature de sommet, elle-même coiffée radialement d'une bande de roulement, ladite bande de roulement étant réunie à deux bourrelets par l'intermédiaire de deux flancs, au moins une couche d'éléments de renforcement de l'armature de carcasse étant ancrée dans chacun des bourrelets par retournement autour d'une tringle, l'armature de carcasse étant renforcé par au moins une couche d'éléments de renforcement retournée autour de la tringle, une extrémité de ladite au moins une couche d'éléments de renforcement retournée autour de la tringle étant axialement extérieure au retournement d'armature de carcasse et radialement intérieure à l'extrémité dudit retournement, l'autre extrémité de ladite au moins une couche d'éléments de renforcement retournée autour de la tringle étant axialement intérieure à l'armature de carcasse, les éléments de renforcement de ladite au moins une couche d'éléments de renforcement retournée autour de la tringle étant des câbles métalliques non frettés à au moins deux couches saturées, au moins une couche interne étant gainée d'une couche constituée d'une composition polymérique telle qu'une composition de caoutchouc réticulable ou réticulée, de préférence à base d'au moins un élastomère diénique et la distance entre l'extrémité, axialement extérieure au retournement d'armature de carcasse, de ladite au moins une couche d'éléments de renforcement retournée autour de la tringle et l'extrémité du retournement de l'armature de carcasse étant inférieure à 5 mm.

Selon un mode de réalisation avantageux de l'invention, les éléments de renforcement d'au moins une couche de l'armature de carcasse sont alors des câbles métalliques à au moins deux couches, au moins une couche interne étant gainée d'une couche constituée d'une composition polymérique telle qu'une composition de caoutchouc réticulable ou réticulée, de préférence à base d'au moins un élastomère diénique

Au sens de l'invention, des câbles métalliques non frettés à au moins deux couches saturées, au moins une couche interne étant gainée d'une couche constituée d'une composition polymérique telle qu'une composition de caoutchouc réticulable ou réticulée présentent au test dit de perméabilité un débit quasi nul et donc inférieur à 5 cm3/min.

Par l'expression "composition à base d'au moins un élastomère diénique", on entend de manière connue que la composition comprend à titre majoritaire (i.e. selon une fraction massique supérieure à 50%) ce ou ces élastomères diéniques.

On notera que la gaine selon l'invention s'étend d'une manière continue autour de la couche qu'elle recouvre (c'est-à-dire que cette gaine est continue dans la direction "orthoradiale" du câble qui est perpendiculaire à son rayon), de manière à former un manchon continu de section transversale qui est avantageusement pratiquement circulaire.

On notera également que la composition de caoutchouc de cette gaine est réticulable ou réticulée, c'est-à-dire qu'elle comprend par définition un système de réticulation adapté pour permettre la réticulation de la composition lors de sa cuisson (i.e., son durcissement et non sa fusion) ; ainsi, cette composition de caoutchouc peut être qualifiée d'infusible, du fait qu'elle ne peut pas être fondue par chauffage à quelque température que ce soit.

Par élastomère ou caoutchouc "diénique", on entend de manière connue un élastomère issu au moins en partie (i.e. un homopolymère ou un copolymère) de monomères diènes (monomères porteurs de deux doubles liaisons carbone-carbone, conjuguées ou non).

Les élastomères diéniques peuvent être classés de manière connue en deux catégories : ceux dits "essentiellement insaturés" et ceux dits "essentiellement saturés". De manière générale, on entend ici par élastomère diénique "essentiellement insaturé" un élastomère diénique issu au moins en partie de monomères diènes conjugués, ayant un taux de motifs ou unités d'origine diénique (diènes conjugués) qui est supérieur à 15% (% en moles). C'est ainsi, par exemple, que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans le câble de l'invention :
(a) tout homopolymère obtenu par polymérisation d'un monomère diène conjugué ayant de 4 à 12 atomes de carbone;
(b) tout copolymère obtenu par copolymérisation d'un ou plusieurs diènes conjugués entre eux ou avec un ou plusieurs composés vinyle aromatique ayant de 8 à 20 atomes de carbone;
(c) un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, la présente invention est en premier lieu mise en oeuvre avec des élastomères diéniques essentiellement insaturés, en particulier du type (a) ou (b) ci-dessus.

Ainsi, l'élastomère diénique est préférentiellement choisi dans le groupe constitué par les polybutadiènes (BR), le caoutchouc naturel (NR), les polyisoprènes de synthèse (IR), les différents copolymères de butadiène, les différents copolymères d'isoprène, et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

De préférence encore selon l'invention, l'élastomère diénique choisi est majoritairement (c'est-à-dire pour plus de 50 pce) constitué d'un élastomère isoprénique. Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

Selon un mode avantageux de l'invention, l'élastomère diénique choisi est exclusivement (c'est-à-dire pour 100 pce) constitué de caoutchouc naturel, de polyisoprène de synthèse ou d'un mélange de ces élastomères, le polyisoprène de synthèse ayant un taux (% molaire) de liaisons cis-1,4 de préférence supérieur à 90%, plus préférentiellement encore supérieur à 98%.

On pourrait aussi utiliser, selon un mode de réalisation particulier de l'invention, des coupages (mélanges) de ce caoutchouc naturel et/ou ces polyisoprènes de synthèse avec d'autres élastomères diéniques fortement insaturés, notamment avec des élastomères SBR ou BR tels que précités.

La gaine de caoutchouc du câble de l'invention peut contenir un seul ou plusieurs élastomère(s) diénique(s), ce(s) dernier(s) pouvant être utilisé(s) en association avec tout type d'élastomère synthétique autre que diénique, voire avec des polymères autres que des élastomères, par exemple des polymères thermoplastiques, ces polymères autres qu'élastomères étant alors présents à titre de polymère minoritaire.

Bien que la composition de caoutchouc de ladite gaine soit préférentiellement dépourvue de tout plastomère et qu'elle ne comporte qu'un élastomère (ou mélange d'élastomères) diénique(s) comme base polymérique, ladite composition pourrait aussi comprendre au moins un plastomère selon une fraction massique xₚ inférieure à la fraction massique xₑ du(des) élastomère(s). Dans un tel cas, on a de préférence la relation suivante : 0 < xₚ < 0,5. xₑ, et plus préférentiellement: 0 < xₚ < 0,1. xₑ.

De préférence, le système de réticulation de la gaine de caoutchouc est un système dit de vulcanisation, c'est-à-dire à base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus. Le soufre est utilisé à un taux préférentiel compris entre 0,5 et 10 pce, plus préférentiellement compris entre 1 et 8 pce, l'accélérateur primaire de vulcanisation, par exemple un sulfénamide, est utilisé à un taux préférentiel compris entre 0,5 et 10 pce, plus préférentiellement compris entre 0,5 et 5,0 pce.

La composition de caoutchouc de la gaine selon l'invention comprend, outre ledit système de réticulation, tous les ingrédients habituels utilisables dans les compositions de caoutchouc pour pneumatiques, tels que des charges renforçantes à base de noir de carbone et/ou d'une charge inorganique renforçante telle que silice, des agents anti-vieillissement, par exemple des antioxydants, des huiles d'extension, des plastifiants ou des agents facilitant la mise en oeuvre des compositions à l'état cru, des accepteurs et donneurs de méthylène, des résines, des bismaléimides, des systèmes promoteurs d'adhésion connus du type "RFS" (résorcinol-formaldéhyde-silice) ou sels métalliques, notamment des sels de cobalt.

De préférence, la composition de la gaine de caoutchouc présente, à l'état réticulé, un module sécant en extension à 10% d'allongement (noté M10), mesuré selon la norme ASTM D 412 de 1998, inférieur à 20 MPa et plus préférentiellement inférieur à 12 MPa, en particulier entre 4 et 11 MPa.

A titre préférentiel, la composition de cette gaine est choisie identique à la composition utilisée pour la matrice de caoutchouc que les câbles selon l'invention sont destinés à renforcer. Ainsi, il n'y a aucun problème d'incompatibilité éventuelle entre les matériaux respectifs de la gaine et de la matrice de caoutchouc.

De préférence, ladite composition est à base de caoutchouc naturel et elle comprend du noir de carbone à titre de charge renforçante, par exemple un noir de carbone de grade (ASTM) 300, 600 ou 700 (par exemple N326, N330, N347, N375, N683, N772).

Selon une variante de l'invention, les éléments de renforcement d'au moins une couche retournée autour de la tringle présentant au test dit de perméabilité un débit inférieur à 5 cm³/mn et avantageusement encore les éléments de renforcement d'au moins une couche de l'armature de carcasse présentant au test dit de perméabilité un débit inférieur à 20 cm³/mn sont des câbles métalliques à couches de construction [L+M] ou [L+M+N], comportant une première couche C1 à L fils de diamètre d₁ avec L allant de 1 à 4, entourée d'au moins une couche intermédiaire C2 à M fils de diamètre d₂ enroulés ensemble en hélice selon un pas p₂ avec M allant de 3 à 12, ladite couche C2 étant éventuellement entourée d'une couche externe C3 de N fils de diamètre d₃ enroulés ensemble en hélice selon un pas p₃ avec N allant de 8 à 20, une gaine constituée d'une composition de caoutchouc réticulable ou réticulée à base d'au moins un élastomère diénique, recouvrant, dans la construction [L+M], ladite première couche C1 et, dans la construction [L+M+N], au moins ladite couche C2.

De préférence, le diamètre des fils de la première couche de la couche interne (C1) est compris entre 0.10 et 0.5 mm et le diamètre des fils des couches externes (C2, C3) est compris entre 0.10 et 0.5 mm.

De préférence encore, le pas d'hélice d'enroulement desdits fils de la couche externe (C3) est compris entre 8 et 25 mm.

Au sens de l'invention, le pas représente la longueur, mesurée parallèlement à l'axe du câble, au bout de laquelle un fil ayant ce pas effectue un tour complet autour de l'axe du câble ; ainsi, si l'on sectionne l'axe par deux plans perpendiculaires audit axe et séparés par une longueur égale au pas d'un fil d'une couche constitutive du câble, l'axe de ce fil a dans ces deux plans la même position sur les deux cercles correspondant à la couche du fil considéré.

Avantageusement, le câble présente l'une, et plus préférentiellement encore l'ensemble des caractéristiques suivantes qui est vérifié(e) :
- la couche C3 est une couche saturée, c'est-à-dire qu'il n'existe pas suffisamment de place dans cette couche pour y ajouter au moins un (N+1)ème fil de diamètre d₃, N représentant alors le nombre maximal de fils enroulables en une couche autour de la couche C2 ;
- la gaine de caoutchouc recouvre en outre la couche interne C1 et/ou sépare les fils deux à deux adjacents de la couche intermédiaire C2 ;
- la gaine de caoutchouc recouvre pratiquement la demi-circonférence radialement intérieure de chaque fil de la couche C3, de telle sorte qu'elle sépare les fils deux à deux adjacents de cette couche C3.

Dans la construction L+M+N selon l'invention, la couche intermédiaire C2 comporte de préférence six ou sept fils, et le câble conforme à l'invention présente alors les caractéristiques préférentielles suivantes (d₁, d₂, d₃, p₂ et p₃ en mm) :
- (i) 0,10 < d₁ < 0,28 ;
- (ii) 0,10 < d₂ < 0,25 ;
- (iii) 0,10 < d₃ < 0,25 ;
- (iv) M = 6 ou M = 7 ;
- (v) 5 π (d₁ + d₂) < p₂ ≤ p₃ < 5 π (d₁ + 2d₂ + d₃) ;
- (vi) les fils desdites couches C2, C3 sont enroulés dans le même sens de torsion (S/S ou Z/Z).

De préférence, la caractéristique (v) est telle que p₂ = p₃, de telle sorte que le câble est dit compact compte tenu par ailleurs de la caractéristique (vi) (fils des couches C2 et C3 enroulés dans le même sens).

Selon la caractéristique (vi), tous les fils des couches C2 et C3 sont enroulés dans le même sens de torsion, c'est-à-dire soit dans la direction S (disposition "S/S"), soit dans la direction Z (disposition "Z/Z"). L'enroulement dans le même sens des couches C2 et C3 permet avantageusement, dans le câble conforme à l'invention, de minimiser les frottements entre ces deux couches C2 et C3 et donc l'usure des fils qui les constituent (puisqu'il n'y a plus de contact croisé entre les fils).

De préférence, lesdits câbles métalliques d'au moins une couche retournée autour de la tringle présentant au test dit de perméabilité un débit inférieur à 5 cm³/mn et avantageusement encore lesdits câbles métalliques d'au moins une couche de l'armature de carcasse présentant au test dit de perméabilité un débit inférieur à 20 cm³/mn sont des câbles à couches de construction notée 1+M+N, c'est-à-dire que la couche interne C1 est constituée d'un seul fil.

Avantageusement encore, les rapports (d₁/d₂) sont de préférence fixés dans des limites données, selon le nombre M (6 ou 7) de fils de la couche C2, comme suit :

| | |
|---|---|
| pour M = 6 : | 0,9 < (d₁ / d₂) < 1,3 ; |
| pour M = 7 : | 1,3 < (d₁ / d₂) < 1,6. |

Une valeur trop faible du rapport d₁ / d₂ peut être préjudiciable à l'usure entre la couche interne et les fils de la couche C2. Une valeur trop élevée peut quant à elle nuire à la compacité du câble, pour un niveau de résistance en définitive peu modifié, ainsi qu'à sa flexibilité ; la rigidité accrue de la couche interne C1 due à un diamètre d₁ trop élevé pourrait être par ailleurs préjudiciable à la faisabilité elle-même du câble, lors des opérations de câblage.

Les fils des couches C2 et C3 peuvent avoir un diamètre identique ou différent d'une couche à l'autre. On utilise de préférence des fils de même diamètre (d₂=d₃), notamment pour simplifier le procédé de câblage et abaisser les coûts.

Le nombre maximal Nₘₐₓ de fils enroulables en une couche unique saturée C3 autour de la couche C2 est bien entendu fonction de nombreux paramètres (diamètre d₁ de la couche interne, nombre M et diamètre d₂ des fils de la couche C2, diamètre d₃ des fils de la couche C3).

Lesdits câbles métalliques d'au moins une couche retournée autour de la tringle présentant au test dit de perméabilité un débit inférieur à 5 cm³/mn et avantageusement encore lesdits câbles métalliques d'au moins une couche de l'armature de carcasse présentant au test dit de perméabilité un débit inférieur à 20 cm³/mn sont de préférence choisis parmi les câbles de structure 1+6+10, 1+6+11, 1+6+12, 1+7+11, 1+7+12 ou 1+7+13.

Pour un meilleur compromis entre résistance, faisabilité et tenue en flexion du câble, d'une part, et pénétrabilité par le caoutchouc, d'autre part, on préfère que les diamètres des fils des couches C2 et C3, identiques ou non, soient inférieurs à 0,22 mm et de préférence supérieurs à 0,12 mm.

Dans un tel cas, on a plus préférentiellement les relations suivantes qui sont vérifiées :
0,14 < d₁ < 0,22;
0,12 < d₂ ≤ d₃ < 0,20 ;
5 < p₂ ≤ p₃ < 12 (pas en mm réduits) ou bien 20 < p₂ ≤ p₃ < 30 (pas en mm élevés).

Un diamètre inférieur à 0,19 mm permet de réduire le niveau des contraintes subies par les fils lors des variations importantes de courbure des câbles, alors qu'on choisit de préférence des diamètres supérieurs à 0,16 mm pour des raisons notamment de résistance des fils et de coût industriel.

Un mode de réalisation avantageux consiste par exemple à choisir p₂ et p₃ compris entre 8 et 12 mm, avantageusement avec des câbles de structure 1+6+12.

De préférence, la gaine de caoutchouc présente une épaisseur moyenne allant de 0,010 mm à 0,040 mm.

D'une manière générale, lesdits câbles métalliques d'au moins une couche retournée autour de la tringle présentant au test dit de perméabilité un débit inférieur à 5 cm³/mn et avantageusement encore lesdits câbles métalliques d'au moins une couche de l'armature de carcasse présentant au test dit de perméabilité un débit inférieur à 20 cm³/mn selon l'invention peuvent être réalisés avec tout type de fils métalliques, notamment en acier, par exemple des fils en acier au carbone et/ou des fils en acier inoxydable. On utilise de préférence un acier au carbone, mais il est bien entendu possible d'utiliser d'autres aciers ou d'autres alliages.

Lorsqu'un acier au carbone est utilisé, sa teneur en carbone (% en poids d'acier) est de préférence comprise entre 0,1% et 1,2%, plus préférentiellement de 0,4% à 1,0% ; ces teneurs représentent un bon compromis entre les propriétés mécaniques requises pour le pneumatique et la faisabilité du fil. Il est à noter qu'une teneur en carbone comprise entre 0,5% et 0,6% rend de tels aciers finalement moins coûteux car plus faciles à tréfiler. Un autre mode avantageux de réalisation de l'invention peut consister aussi, selon les applications visées, à utiliser des aciers à faible teneur en carbone, comprise par exemple entre 0,2% et 0,5%, en raison notamment d'un coût plus bas et d'une plus grande facilité de tréfilage.

Lesdits câbles métalliques d'au moins une couche retournée autour de la tringle et avantageusement encore d'au moins une couche de l'armature de carcasse selon l'invention pourront être obtenus selon différentes techniques connues de l'homme du métier, par exemple en deux étapes, tout d'abord par gainage via une tête d'extrusion de l'âme ou structure intermédiaire L+M (couches C1+C2), étape suivie dans un deuxième temps d'une opération finale de câblage ou retordage des N fils restants (couche C3) autour de la couche C2 ainsi gainée. Le problème de collant à l'état cru posé par la gaine de caoutchouc, lors des opérations intermédiaires éventuelles de bobinage et débobinage pourra être résolu de manière connue par l'homme du métier, par exemple par l'emploi d'un film intercalaire en matière plastique.

Selon une variante de réalisation de l'invention, l'armature de sommet du pneumatique est formée d'au moins deux couches de sommet de travail d'éléments de renforcement inextensibles, croisés d'une couche à l'autre en faisant avec la direction circonférentielle des angles compris entre 10° et 45°.

Selon d'autres variantes de réalisation de l'invention, l'armature de sommet comporte encore au moins une couche d'éléments de renforcement circonférentiels.

Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

La couche de protection peut avoir une largeur axiale inférieure à la largeur axiale de la couche de travail la moins large. Ladite couche de protection peut aussi avoir une largeur axiale supérieure à la largeur axiale de la couche de travail la moins large, telle qu'elle recouvre les bords de la couche de travail la moins large et, dans le cas de la couche radialement supérieure comme étant le moins large, telle qu'elle soit couplée, dans le prolongement axial de l'armature additionnelle, avec la couche de sommet de travail la plus large sur une largeur axiale, pour être ensuite, axialement à l'extérieur, découplée de ladite couche de travail la plus large par des profilés d'épaisseur au moins égale à 2 mm. La couche de protection formée d'éléments de renforcement élastiques peut, dans le cas cité ci-dessus, être d'une part éventuellement découplée des bords de ladite couche de travail la moins large par des profilés d'épaisseur sensiblement moindre que l'épaisseur des profilés séparant les bords des deux couches de travail, et avoir d'autre part une largeur axiale inférieure ou supérieure à la largeur axiale de la couche de sommet la plus large.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

D'autres détails et caractéristiques avantageux de l'invention ressortiront ci-après de la description des exemples de réalisation de l'invention notamment en référence aux figures 1 à 5 qui représentent :
- figure1, une vue méridienne d'un schéma d'un pneumatique selon un mode de réalisation de l'invention,
- figure 2, une représentation schématique agrandie de la zone du bourrelet du pneumatique de la figure 1,
- figure 3, une représentation schématique d'une vue en coupe d'un premier exemple de câble métallique d'au moins une couche retournée autour de la tringle du pneumatique de la figure 1,
- figure 4, une représentation schématique d'une vue en coupe d'un deuxième exemple de câble métallique d'au moins une couche retournée autour de la tringle du pneumatique de la figure 1,
- figure 5, une représentation schématique d'une vue en coupe d'un troisième exemple de câble métallique d'au moins une couche retournée autour de la tringle du pneumatique de la figure 1.

Les figures ne sont pas représentées à l'échelle pour en simplifier la compréhension.

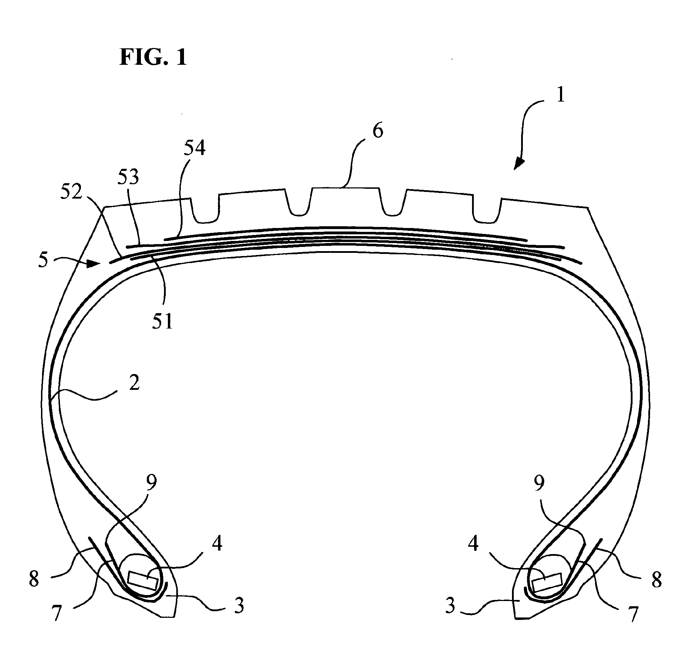

Sur la figure 1, le pneumatique 1, de dimension 315/60 R 22.5, comprend une armature de carcasse radiale 2 ancrée dans deux bourrelets 3, autour de tringles 4. L'armature de carcasse 2 est formée d'une seule couche de câbles métalliques. L'armature de carcasse 2 est frettée par une armature de sommet 5, elle-même coiffée d'une bande de roulement 6. L'armature de sommet 5 est formée radialement de l'intérieur à l'extérieur :
- d'une couche de triangulation 51 formée de câbles métalliques inextensibles non frettés 2+7x0.28, continus sur toute la largeur de la nappe, orientés d'un angle égal à 65°,
- d'une première couche de travail 52 formée de câbles métalliques inextensibles non frettés 0.12+3+8x0.35, continus sur toute la largeur de la nappe, orientés d'un angle égal à 18°,
- d'une seconde couche de travail 53 formée de câbles métalliques inextensibles non frettés 0.12+3+8x0.35, continus sur toute la largeur de la nappe, orientés d'un angle égal à 18° et croisés avec les câbles métalliques de la première couche de travail,
- d'une couche de protection 54 formées de câbles métalliques élastiques 3x2x0.35.

La couche d'armature de carcasse 2 est enroulée autour d'une tringle 4 pour former un retournement 7. Le retournement 7 est encore renforcé par une couche d'éléments de renforcement 8 retournée autour de la tringle.

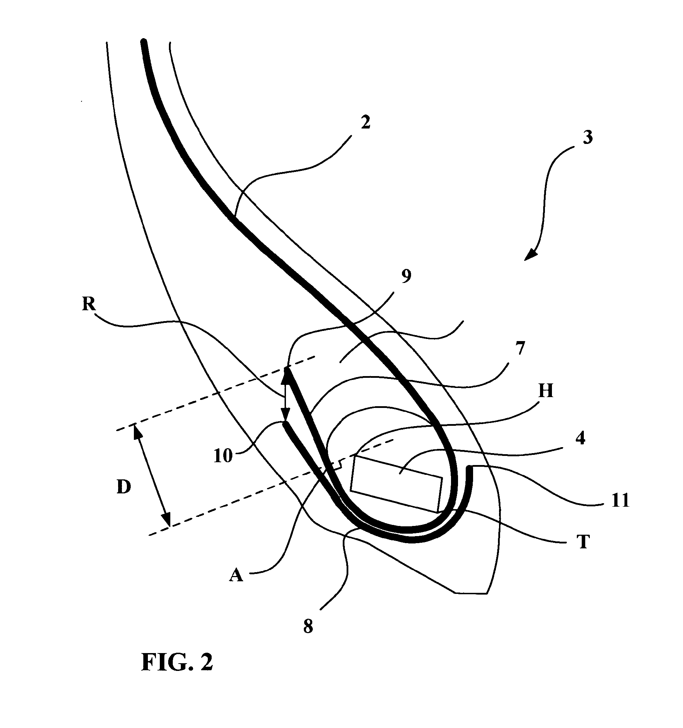

La figure 2 illustre plus en détail une représentation schématique en coupe d'un bourrelet 3 du pneumatique dans lequel on retrouve une partie de la couche d'armature de carcasse 2 enroulée autour d'une tringle 4 pour former un retournement 7 et la couche d'éléments de renforcement 8 retournée autour de la tringle et dont une extrémité 11 est radialement extérieure au point T de la tringle radialement le plus proche de l'axe de rotation et le sommet du pneumatique.

La distance R entre l'extrémité radialement extérieure 10 de la couche 8 retournée autour de la tringle et l'extrémité 9 du retournement 7 est égale à 4 mm et donc inférieure à 5 mm.

Un tel rapprochement entre l'extrémité radialement extérieure 10 de la couche 8 retournée autour de la tringle et l'extrémité 9 du retournement 7 peut permettre comme évoqué précédemment un positionnement de l'extrémité du retournement dans une zone modérément pénalisante en termes de contraintes pouvant conduire aux phénomènes de fissuration des mélanges polymériques environnants. Si l'on considère la longueur D du retournement de l'armature de carcasse mesurée selon son abscisse curviligne entre l'extrémité 9 dudit retournement 7 et le point A correspondant à la projection orthogonale sur ledit retournement du point H de la tringle radialement le plus éloigné de l'axe de rotation, il est possible d'envisager une longueur D inférieure de 3 mm pour un pneumatique selon l'invention en comparaison d'un pneumatique usuel de même dimension et de même conception mis à part les caractéristiques de notre invention.

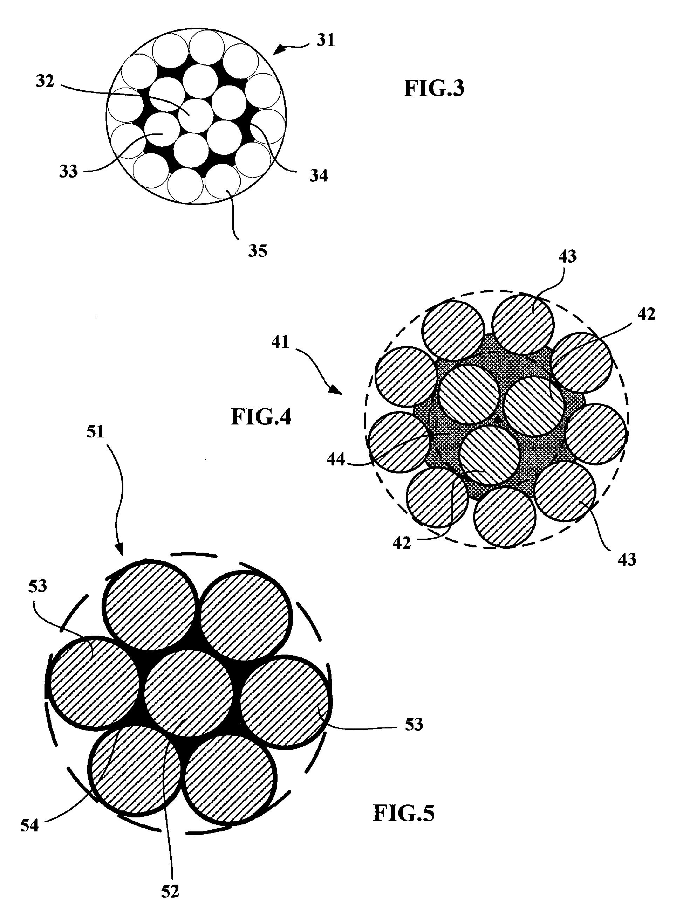

La figure 3 illustre une représentation schématique de la section d'un câble 31 des couches d'éléments de renforcement 8 retournées autour de la tringle du pneumatique 1 de la figure 1. Ce câble 7a est un câble à couche de structure 1+6+12, non fretté, constitué d'un noyau central formée d'un fil 32, d'une couche intermédiaire formée de six fils 33 et d'une couche externe formée de douze fils 35.

Il présente les caractéristiques suivantes (d et p en mm) :
- structure 1+6+12 ;
- d₁ = 0.20 (mm);
- d₂ = 0.18 (mm);
- p₂ = 10 (mm)
- d₃ = 0.18 (mm);
- p₃ = 10 (mm),
- (d₂ / d₃) = 1;
avec d₂, p₂, respectivement le diamètre et le pas d'hélice de la couche intermédiaire et d₃ et p₃, respectivement le diamètre et le pas de d'hélice des fils de la couche externe.

L'âme du câble constitué du noyau central formé du fil 32 et de la couche intermédiaire formée des six fils 33 est gainé par une composition de caoutchouc 34 à base d'élastomère diénique non vulcanisé (à l'état cru). Le gainage est obtenu via une tête d'extrusion de l'âme constituée du fil 32 entouré des six fils 33, suivi d'une opération finale de retordage ou câblage des 12 fils 35 autour de l'âme ainsi gainée.

Le câble 31 présente au test dit de perméabilité, tel que décrit précédemment un débit égal à 0 cm³/mn et donc inférieur à 2 cm³/mn. Sa pénétration par la composition de caoutchouc est égale à 95 %.

Le câble 31 présente un diamètre égal à 0.95 mm.

La composition élastomérique constituant la gaine de caoutchouc 34 est réalisée à partir d'une composition telle que décrite précédemment à base de caoutchouc naturel et de noir de carbone.

La figure 4 illustre une représentation schématique de la section d'un autre câble 41 des couches d'éléments de renforcement 8 retournées autour de la tringle du pneumatique 1 selon l'invention en remplacement du câble de la figure 3. Ce câble 41 est un câble à couche de structure 3+9, non fretté, constitué d'une âme centrale formée d'un câble constitué de trois fils 42 retordus entre eux et d'une couche externe formée de neuf fils 43.

Il présente les caractéristiques suivantes (d et p en mm) :
- structure 3+9 ;
- d₁ = 0.18 (mm);
- p₁ = 5 (mm)
- (d₁ / d₂) = 1 ;
- d₂ = 0.18 (mm);
- p₂ = 10 (mm),
avec d₁, p1, respectivement le diamètre et le pas d'hélice des fils de l'âme centrale et d₂ et p₂, respectivement le diamètre et le pas de d'hélice des fils de la couche externe.

L'âme centrale constituée d'un câble formé des trois fils 42 a été gainée par une composition de caoutchouc 44 à base d'élastomère diénique non vulcanisé (à l'état cru). Le gainage est obtenu via une tête d'extrusion du câble 42, suivi d'une opération finale de câblage des 9 fils 43 autour de l'âme ainsi gainée.

Le câble 41 présente au test dit de perméabilité, tel que décrit précédemment un débit égal à 0 cm³/mn et donc inférieur à 2 cm³/mn. Sa pénétration par la composition de caoutchouc est égale à 95 %.

Le câble 41 présente un diamètre égal à 0.8 mm.

La figure 5 illustre une représentation schématique de la section d'un autre câble 51 des couches d'éléments de renforcement 8 retournées autour de la tringle du pneumatique 1 selon l'invention en remplacement du câble de la figure 3. Ce câble 51 est un câble à couche de structure 1+6, non fretté, constitué d'un noyau central formé d'un fil 52 et d'une couche externe formée de six fils 53.

Il présente les caractéristiques suivantes (d et p en mm) :
- structure 1+6 ;
- d₁ = 0,200 (mm);
- (d₁ / d₂) = 1,14 ;
- d₂ = 0,175 (mm);
- p₂ = 10 (mm),
avec d₁, le diamètre du noyau et d₂ et p₂, respectivement le diamètre et le pas d'hélice des fils de la couche externe.

Le noyau central constitué du fil 52 a été gainé par une composition de caoutchouc 54 à base d'élastomère diénique non vulcanisé (à l'état cru). Le gainage est obtenu via une tête d'extrusion du fil 52, suivi d'une opération finale de câblage des 6 fils 53 autour du noyau ainsi gainé.

Le câble 51 présente au test dit de perméabilité, tel que décrit précédemment un débit égal à 0 cm³/mn et donc inférieur à 2 cm³/mn. Sa pénétration par la composition de caoutchouc est égale à 95 %.

Le câble 51 présente un diamètre égal à 0.6 mm.

L'invention telle qu'elle vient d'être décrite notamment en référence aux exemples de réalisation ne doit pas être comprise comme étant limitée à ces exemples. Comme énoncé précédemment, les câbles de l'armature de carcasse peuvent également être choisis parmi des câbles gainés tels que ceux représentés sur les figures 3 à 5. Les pneumatiques peuvent encore comporter une armature de carcasse plus complexe, notamment constitué de deux couches, une seule pouvant former un retournement autour d'une tringle. Le renforcement de l'armature de carcasse dans la zone du bourrelet peut encore être obtenu par plusieurs couches d'éléments de renforcement retournées autour de la tringle ou bien encore par exemple par une combinaison d'une couche d'éléments de renforcement retournée autour de la tringle et d'une couche d'éléments de renforcement parallèle au retournement et qui n'est pas retournée autour de la tringle appelée raidisseur.

Des essais ont été réalisés avec des pneumatiques réalisés selon l'invention conformément à la représentation des figures 1, 2 et 3, et d'autres avec des pneumatiques dits de référence.

Les premiers pneumatiques de référence R1 diffèrent des pneumatiques selon l'invention par des couches retournées autour de la tringle sont identiques à ceux illustrés sur les figures 1 et 2 et dont les éléments de renforcement sont des câbles tels que ceux représentés sur la figure 3 mais qui ne comportent pas de couche de gainage.

Les deuxièmes pneumatiques de référence R2 diffèrent des pneumatiques selon l'invention par des couches retournées autour de la tringle dont les éléments de renforcement sont des câbles tels que ceux représentés sur la figure 3 mais qui ne comportent pas de couche de gainage et en outre la distance entre l'extrémité axialement extérieure de la couche retournée autour de la tringle et l'extrémité du retournement de l'armature de carcasse est égale à 9 mm, donc supérieure à celle des pneumatiques selon l'invention.

Des essais d'endurance ont été réalisés sur une machine de test imposant aux pneumatiques des flèches de 25 à 35 % pour des vitesses de roulage de 60 à 20 Km/h.

Avant d'effectuer les essais, les pneumatiques subissent un vieillissement accéléré en étuve dans des conditions de teneur en oxygène du gaz de gonflage et de température, adaptées pour produire un état de thermo-oxydation des matériaux représentatif d'un usage moyen durant une vie en clientèle.

Les essais ont été réalisés pour les pneumatiques selon l'invention avec des conditions identiques à celles appliquées aux pneumatiques de référence.

Les essais réalisés conduisent pour les pneumatiques R2 à des performances établissant la base 100. Les tests sont arrêtés lors de l'apparition d'une dégradation de la zone basse du pneumatique.

Selon les différentes conditions imposées, les pneumatiques R1 ont parcourus des distances inférieures dans une plage de valeurs équivalentes allant de 65 à 75.

Les pneumatiques selon l'invention ont parcouru des distances au moins équivalentes à celle des pneumatiques R2.

Ces résultats montrent que la combinaison d'une couche retournée autour de la tringle comportant des câbles selon l'invention avec une distance entre l'extrémité axialement extérieure de la couche retournée autour de la tringle et l'extrémité du retournement de l'armature de carcasse conforme à l'invention permet d'obtenir une performance en termes d'endurance de la zone basse du pneumatique semblable à celle d'un pneumatique de configuration plus usuelle dont la couche retournée autour de la tringle comporte des éléments de renforcement non gainé et dont la distance entre l'extrémité radialement extérieure de la couche retournée autour de la tringle et l'extrémité du retournement de l'armature de carcasse est plus importante.

Par ailleurs, les mêmes essais ont été reproduits avec des pneumatiques conformes à l'invention et les pneumatiques de référence R2 en changeant dans chacun des pneumatiques la longueur D du retournement de l'armature de carcasse telle que définie précédemment avec une valeur inférieure de 3 mm à celle des pneumatiques réalisés précédemment.

Les résultats obtenus avec les pneumatiques selon l'invention demeurent voisins de 100 alors que les pneumatiques R2 se voient attribuer une valeur inférieure à 80.

Ces résultats peuvent s'expliquer dans le cas des pneumatiques de référence R2 du fait d'un positionnement de l'extrémité de la couche retournée autour de la tringle, axialement extérieure au retournement d'armature de carcasse, radialement trop bas au regard du crochet de jante de la roue sur laquelle le pneumatique doit être monté.

## Revendications

1. Pneumatique (1) à armature de carcasse radiale (2), constituée d'au moins une couche d'éléments de renforcement, ledit pneumatique comprenant une armature de sommet (5), elle-même coiffée radialement d'une bande de roulement (6), ladite bande de roulement étant réunie à deux bourrelets (3) par l'intermédiaire de deux flancs, au moins une couche d'éléments de renforcement de l'armature de carcasse étant ancrée dans chacun des bourrelets (3) par retournement autour d'une tringle (4), l'armature de carcasse (2) étant renforcé par au moins une couche (8) d'éléments de renforcement retournée autour de la tringle (3), une extrémité (10) de ladite au moins une couche (8) d'éléments de renforcement retournée autour de la tringle (3) étant axialement extérieure au retournement (7) d'armature de carcasse (2) et radialement intérieure à l'extrémité (9) dudit retournement (7), l'autre extrémité (11) de ladite au moins une couche (8) d'éléments de renforcement retournée autour de la tringle (3) étant axialement intérieure à l'armature de carcasse (2), **caractérisé en ce que** les éléments de renforcement de ladite au moins une couche (8) d'éléments de renforcement retournée autour de la tringle sont des câbles métalliques non frettés à couches saturées présentant au test dit de perméabilité un débit inférieur 5 cm³/mn et **en ce que** la distance (R) entre l'extrémité (10), axialement extérieure au retournement (7) d'armature de carcasse (2), de ladite au moins une couche (8) d'éléments de renforcement retournée autour de la tringle (3) et l'extrémité (9) du retournement (7) de l'armature de carcasse (2) est inférieure à 5 mm.

2. Pneumatique (1) selon la revendication 1, **caractérisé en ce que** les câbles métalliques non frettés à couches saturées présentant au test dit de perméabilité un débit inférieur à 5 cm³/mn sont des câbles (31, 41, 51) à au moins deux couches et **en ce qu**'au moins une couche interne est gainée d'une couche (34, 44, 54) constituée d'une composition polymérique telle qu'une composition de caoutchouc réticulable ou réticulée, de préférence à base d'au moins un élastomère diénique.

3. Pneumatique (1) selon la revendication 1 ou 2, **caractérisé en ce que** lesdits câbles métalliques (31, 41, 51) non frettés à couches saturées de ladite au moins une couche (8) d'éléments de renforcement retournée autour de la tringle (3) présentent au test dit de perméabilité un débit inférieur à 2 cm³/mn.

4. Pneumatique (1) selon l'une des revendications 1 à 3, **caractérisé en ce que** les éléments de renforcement d'au moins une couche de l'armature de carcasse (2) sont des câbles métalliques présentant au test dit de perméabilité un débit inférieur 20 cm³/mn.

5. Pneumatique (1) selon la revendication 4, **caractérisé en ce que** les câbles métalliques d'au moins une couche de l'armature de carcasse (2) présentant au test dit de perméabilité un débit inférieur à 20 cm³/mn sont des câbles à au moins deux couches et **en ce qu**'au moins une couche interne est gainée d'une couche constituée d'une composition polymérique telle qu'une composition de caoutchouc réticulable ou réticulée, de préférence à base d'au moins un élastomère diénique.

6. Pneumatique (1) selon la revendication 4 ou 5, **caractérisé en ce que** lesdits câbles métalliques d'au moins une couche de l'armature de carcasse (2) présentent au test dit de perméabilité un débit inférieur à 10 cm³/mn et de préférence inférieur à 2 cm³/mn.

7. Pneumatique (1) selon l'une des revendications 1 à 6, **caractérisé en ce que** lesdits éléments de renforcement de ladite au moins une couche (8) d'éléments de renforcement retournée autour de la tringle (3) sont des câbles métalliques (31, 41, 51) non frettés à couches saturées de construction [L+M] ou [L+M+N], comportant une première couche C1 à L fils de diamètre d₁ avec L allant de 1 à 4, entourée d'au moins une couche intermédiaire C2 à M fils de diamètre d₂ enroulés ensemble en hélice selon un pas p₂ avec M allant de 3 à 12, ladite couche C2 étant éventuellement entourée d'une couche externe C3 de N fils de diamètre d₃ enroulés ensemble en hélice selon un pas p₃ avec N allant de 8 à 20, et **en ce qu**'une gaine (34, 44, 54) constituée d'une composition de caoutchouc réticulable ou réticulée à base d'au moins un élastomère diénique, recouvre, dans la construction [L+M], ladite première couche C1 et, dans la construction [L+M+N], au moins ladite couche C2.

8. Pneumatique (1) selon l'une des revendications 1 à 7, **caractérisé en ce que** lesdits éléments de renforcement d'au moins une couche de l'armature de carcasse (2) sont des câbles métalliques à couches de construction [L+M] ou [L+M+N], comportant une première couche C1 à L fils de diamètre d₁ avec L allant de 1 à 4, entourée d'au moins une couche intermédiaire C2 à M fils de diamètre d₂ enroulés ensemble en hélice selon un pas p₂ avec M allant de 3 à 12, ladite couche C2 étant éventuellement entourée d'une couche externe C3 de N fils de diamètre d₃ enroulés ensemble en hélice selon un pas p₃ avec N allant de 8 à 20, et **en ce qu**'une gaine constituée d'une composition de caoutchouc réticulable ou réticulée à base d'au moins un élastomère diénique, recouvre, dans la construction [L+M], ladite première couche C1 et, dans la construction [L+M+N], au moins ladite couche C2.

9. Pneumatique (1) selon la revendication 7 ou 8, **caractérisé en ce que** le diamètre des fils de la première couche C1 est compris entre 0.10 et 0.5 mm, et **en ce que** le diamètre des fils des couches C2, C3 est compris entre 0.10 et 0.5 mm.

10. Pneumatique (1) selon la revendication 9, **caractérisé en ce que** le diamètre des fils des couches C2, C3 est inférieur à 0.22 mm.

11. Pneumatique (1) selon l'une des revendications 7 à 10, **caractérisé en ce que** le pas d'hélice d'enroulement desdits fils de la couche externe C3 est compris entre 8 et 25 mm.

12. Pneumatique (1) selon l'une des revendications 2 à 11, **caractérisé en ce que** ledit au moins un élastomère diénique est choisi dans le groupe constitué par les polybutadiènes, le caoutchouc naturel, les polyisoprènes de synthèse, les copolymères de butadiène, les copolymères d'isoprène, et les mélanges de ces élastomères.

13. Pneumatique (1) selon l'une des revendications 2 à 12, **caractérisé en ce que** la composition de caoutchouc réticulable ou réticulée à base d'au moins un élastomère diénique présente à l'état réticulé un module sécant en extension inférieur à 20 MPa et de préférence, inférieur à 12 MPa.

## Patentansprüche

1. Reifen (1) mit radialer Karkassenbewehrung (2), welche aus mindestens einer Schicht von Verstärkungselementen besteht, wobei der Reifen eine Scheitelbewehrung (5) aufweist, die ihrerseits radial von einem Laufstreifen (6) bedeckt ist, wobei der Laufstreifen über zwei Seitenwände mit zwei Wülsten (3) verbunden ist, wobei mindestens eine Schicht von Verstärkungselementen der Karkassenbewehrung in jedem der Wülste (3) durch Umschlagung um einen Wulstkern (4) verankert ist, wobei die Karkassenbewehrung (2) durch mindestens eine um den Wulstkern (4) umgeschlagene Schicht (8) von Verstärkungselementen verstärkt ist, wobei ein Ende (10) der mindestens einen um den Wulstkern (4) umgeschlagenen Schicht (8) von Verstärkungselementen axial außen an der Umschlagung (7) der Karkassenbewehrung (2) und radial innen am Ende (9) der Umschlagung (7) ist, wobei das andere Ende (11) der mindestens einen um den Wulstkern (4) umgeschlagenen Schicht (8) von Verstärkungselementen axial innen an der Karkassenbewehrung (2) ist, **dadurch gekennzeichnet, dass** die Verstärkungselemente der mindestens einen um den Wulstkern (4) umgeschlagenen Schicht (8) von Verstärkungselementen nicht bandagierte Metallseile mit gesättigten Schichten sind, die bei der sogenannten Permeabilitätsprüfung einen Durchsatz von weniger als 5 cm³/min aufweisen, und **dadurch, dass** der Abstand (R) zwischen dem axial außen an der Umschlagung (7) der Karkassenbewehrung (2) liegenden Ende (10) der mindestens einen um den Wulstkern (4) umgeschlagenen Schicht (8) von Verstärkungselementen und dem Ende (9) der Umschlagung (7) der Karkassenbewehrung (2) weniger als 5 mm beträgt.

2. Reifen (1) nach Anspruch 1, **dadurch gekennzeichnet, dass** die nicht bandagierten Metallseile mit gesättigten Schichten, die bei der sogenannten Permeabilitätsprüfung einen Durchsatz von weniger als 5 cm³/min aufweisen, Seile (31, 41, 51) mit mindestens zwei Schichten sind, und **dadurch, dass** mindestens eine innere Schicht von einer Schicht (34, 44, 54) umhüllt ist, die aus einer Polymerzusammensetzung wie etwa einer Zusammensetzung aus vernetzbarem oder vernetztem Kautschuk besteht, vorzugsweise auf der Basis mindestens eines Dienelastomers.

3. Reifen (1) nach Anspruch 1 oder 2, **dadurch gekennzeichnet, dass** die nicht bandagierten Metallseile (31, 41, 51) mit gesättigten Schichten der wenigstens einen um den Wulstkern (4) umgeschlagenen Schicht (8) von Verstärkungselementen bei der sogenannten Permeabilitätsprüfung einen Durchsatz von weniger als 2 cm³/min aufweisen.

4. Reifen (1) nach einem der Ansprüche 1 bis 3, **dadurch gekennzeichnet, dass** die Verstärkungselemente mindestens einer Schicht der Karkassenbewehrung (2) Metallseile sind, die bei der sogenannten Permeabilitätsprüfung einen Durchsatz von weniger als 20 cm³/min aufweisen.

5. Reifen (1) nach Anspruch 4, **dadurch gekennzeichnet, dass** die Metallseile mindestens einer Schicht der Karkassenbewehrung (2), die bei der sogenannten Permeabilitätsprüfung einen Durchsatz von weniger als 20 cm³/min aufweisen, Seile mit mindestens zwei Schichten sind, und **dadurch,** dass mindestens eine innere Schicht von einer Schicht umhüllt ist, die aus einer Polymerzusammensetzung wie etwa einer Zusammensetzung aus vernetzbarem oder vernetztem Kautschuk besteht, vorzugsweise auf der Basis mindestens eines Dienelastomers.

6. Reifen (1) nach Anspruch 4 oder 5, **dadurch gekennzeichnet, dass** die Metallseile mindestens einer Schicht der Karkassenbewehrung (2) bei der sogenannten Permeabilitätsprüfung einen Durchsatz von weniger als 10 cm³/min und vorzugsweise weniger als 2 cm³/min aufweisen.

7. Reifen (1) nach einem der Ansprüche 1 bis 6, **dadurch gekennzeichnet, dass** die Verstärkungselemente der mindestens einen um den Wulstkern (4) umgeschlagenen Schicht (8) von Verstärkungselementen nicht bandagierte Metallseile (31, 41, 51) mit gesättigten Schichten mit einem Aufbau [L+M] oder [L+M+N] sind, die eine erste Schicht C1 aus L Drähten mit einem Durchmesser d₁ mit L von 1 bis 4, umgeben von mindestens einer Zwischenschicht C2 aus M Drähten mit einem Durchmesser d₂, die zusammen gemäß einer Steigung p₂ schraubenförmig aufgewickelt sind, mit M von 3 bis 12, aufweisen, wobei die Schicht C2 ggf. von einer Außenschicht C3 aus N Drähten mit einem Durchmesser d₃, die zusammen gemäß einer Steigung p₃ schraubenförmig aufgewickelt sind, mit N von 8 bis 20, umgeben ist, und **dadurch, dass** eine aus einer vernetzbaren oder vernetzten Kautschukzusammensetzung auf der Basis mindestens eines Dienelastomers bestehende Hülle (34, 44, 54) in dem Aufbau [L+M] die erste Schicht C1 und in dem Aufbau [L+M+N] mindestens die Schicht C2 bedeckt.

8. Reifen (1) nach einem der Ansprüche 1 bis 7, **dadurch gekennzeichnet, dass** die Verstärkungselemente mindestens einer Schicht der Karkassenbewehrung (2) Metallseile mit Schichten mit einem Aufbau [L+M] oder [L+M+N] sind, die eine erste Schicht C1 aus L Drähten mit einem Durchmesser d₁ mit L von 1 bis 4, umgeben von mindestens einer Zwischenschicht C2 aus M Drähten mit einem Durchmesser d₂, die zusammen gemäß einer Steigung p₂ schraubenförmig aufgewickelt sind, mit M von 3 bis 12, aufweisen, wobei die Schicht C2 ggf. von einer Außenschicht C3 aus N Drähten mit einem Durchmesser d₃, die zusammen gemäß einer Steigung p₃ schraubenförmig aufgewickelt sind, mit N von 8 bis 20, umgeben ist, und **dadurch, dass** eine aus einer vernetzbaren oder vernetzten Kautschukzusammensetzung auf der Basis mindestens eines Dienelastomers bestehende Hülle in dem Aufbau [L+M] die erste Schicht C1 und in dem Aufbau [L+M+N] mindestens die Schicht C2 bedeckt.

9. Reifen (1) nach Anspruch 7 oder 8, **dadurch gekennzeichnet, dass** der Durchmesser der Drähte der ersten Schicht C1 zwischen 0,10 und 0,5 mm liegt, und **dadurch, dass** der Durchmesser der Drähte der Schichten C2, C3 zwischen 0,10 und 0,5 mm liegt.

10. Reifen (1) nach Anspruch 9, **dadurch gekennzeichnet, dass** der Durchmesser der Drähte der Schichten C2, C3 kleiner als 0,22 mm ist.

11. Reifen (1) nach einem der Ansprüche 7 bis 10, **dadurch gekennzeichnet, dass** die Wicklungssteigung der Drähte der Außenschicht C3 zwischen 8 und 25 mm beträgt.

12. Reifen (1) nach einem der Ansprüche 2 bis 11, **dadurch gekennzeichnet, dass** das mindestens eine Dienelastomer aus der Gruppe ausgewählt ist, die aus den Polybutadienen, Naturkautschuk, den synthetischen Polyisoprenen, den Butadien-Copolymeren, den Isopren-Copolymeren und den Mischungen dieser Elastomere besteht.

13. Reifen (1) nach einem der Ansprüche 2 bis 12, **dadurch gekennzeichnet, dass** die Zusammensetzung aus vernetzbarem oder vernetztem Kautschuk auf der Basis mindestens eines Dienelastomers im vernetzten Zustand einen Sekanten-Dehnungsmodul von weniger als 20 MPa und vorzugsweise weniger als 12 MPa aufweist.

## Claims

1. Tyre (1) having a radial carcass reinforcement (2), consisting of at least one layer of reinforcing elements, said tyre comprising a crown reinforcement (5), which is itself covered radially with a tread (6), said tread being joined to two beads (3) via two sidewalls, at least one layer of reinforcing elements of the carcass reinforcement being anchored in each of the beads (3) by an upturn around a bead wire (4), the carcass reinforcement (2) being reinforced by at least one layer (8) of reinforcing elements turned up around the bead wire (4), one end (10) of said at least one layer (8) of reinforcing elements turned up around the bead wire (4) being axially on the outside of the carcass reinforcement upturn (7) and radially on the inside of the end (9) of said upturn (7), the other end (11) of said at least one layer (8) of reinforcing elements turned up around the bead wire (4) being axially on the inside of the carcass reinforcement (2), **characterized in that** the reinforcing elements of said at least one layer (8) of reinforcing elements turned up around the bead wire are non-wrapped metal cords with saturated layers, having, in what is called the permeability test, a flow rate of less than 5 cm³/min and **in that** the distance (R) between the end (10), axially on the outside of the carcass reinforcement upturn (7), of said at least one layer (8) of reinforcing elements turned up around the bead wire (4) and the end (9) of the carcass reinforcement upturn (7) is less than 5 mm.

2. Tyre (1) according to Claim 1, **characterized in that** the non-wrapped metal cords with saturated layers having, in what is called the permeability test, a flow rate of less than 5 cm³/min are cords (31, 41, 51) having at least two layers and **in that** at least one inner layer is sheathed with a layer (34, 44, 54) consisting of a polymer composition such as a crosslinkable or crosslinked rubber composition, preferably based on at least one diene elastomer.

3. Tyre (1) according to Claim 1 or 2, **characterized in that** said non-wrapped metal cords (31, 41, 51) with saturated layers of said at least one layer (8) of reinforcing elements turned up around the bead wire (4) have, in what is called the permeability test, a flow rate of less than 2 cm³/min.

4. Tyre (1) according to one of Claims 1 to 3, **characterized in that** the reinforcing elements of at least one layer of the carcass reinforcement (2) are metal cords having, in what is called the permeability test, a flow rate of less than 20 cm³/min.

5. Tyre (1) according to Claim 4, **characterized in that** the metal cords of at least one layer of the carcass reinforcement (2) having, in what is called the permeability test, a flow rate of less than 20 cm³/min are cords having at least two layers and **in that** at least one inner layer is sheathed with a layer consisting of a polymer composition such as a crosslinkable or crosslinked rubber composition, preferably based on at least one diene elastomer.

6. Tyre (1) according to Claim 4 or 5, **characterized in that** said metal cords of at least one layer of the carcass reinforcement (2) have, in what is called the permeability test, a flow rate of less than 10 cm³/min and preferably less than 2 cm³/min.

7. Tyre (1) according to one of Claims 1 to 6, **characterized in that** said reinforcing elements of said at least one layer (8) of reinforcing elements turned up around the bead wire (4) are non-wrapped metal cords (31, 41, 51) with saturated layers of [L+M] or [L+M+N] construction, comprising a first layer C1 having L threads of diameter d₁ where L ranges from 1 to 4, surrounded by at least one intermediate layer C2 having M threads of diameter d₂ wound together in a helix with a pitch p₂ where M ranges from 3 to 12, said layer C2 being optionally surrounded by an outer layer C3 of N threads of diameter d₃ wound together in a helix with a pitch p₃, where N ranges from 8 to 20, and **in that** a sheath (34, 44, 54) consisting of a crosslinkable or crosslinked rubber composition based on at least one diene elastomer covers, in the [L+M] construction, said first layer C1 and, in the [L+M+N] construction, at least said layer C2.

8. Tyre (1) according to one of Claims 1 to 7, **characterized in that** said reinforcing elements of at least one layer of the carcass reinforcement (2) are layered metal cords of [L+M] or [L+M+N] construction, comprising a first layer C1 having L threads of diameter d₁ where L ranges from 1 to 4, surrounded by at least one intermediate layer C2 having M threads of diameter d₂ wound together in a helix with a pitch p₂ where M ranges from 3 to 12, said layer C2 being optionally surrounded by an outer layer C3 of N threads of diameter d₃ wound together in a helix with a pitch p₃, where N ranges from 8 to 20, and **in that** a sheath consisting of a crosslinkable or crosslinked rubber composition based on at least one diene elastomer covers, in the [L+M] construction, said first layer C1 and, in the [L+M+N] construction, at least said layer C2.

9. Tyre (1) according to Claim 7 or 8, **characterized in that** the diameter of the threads of the first layer C1 is between 0.10 and 0.5 mm, and **in that** the diameter of the threads of the layers C2, C3 is between 0.10 and 0.5 mm.

10. Tyre (1) according to Claim 9, **characterized in that** the diameter of the threads of the layers C2, C3 is less than 0.22 mm.

11. Tyre (1) according to one of Claims 7 to 10, **characterized in that** the helix pitch with which said threads of the outer layer C3 are wound is between 8 and 25 mm.

12. Tyre according to one of Claims 2 to 11, **characterized in that** said at least one diene elastomer is selected from the group consisting of polybutadienes, natural rubber, synthetic polyisoprenes, butadiene copolymers, isoprene copolymers and blends of these elastomers.

13. Tyre (1) according to one of Claims 2 to 12, **characterized in that** the crosslinkable or crosslinked rubber composition based on at least one diene elastomer has, in the crosslinked state, a secant modulus in extension less than 20 MPa and preferably less than 12 MPa.
